**Europäisches Patentamt**

**European Patent Office**

**Office européen des brevets**

(11) Publication number : **0 472 344 A2**

# (12) EUROPEAN PATENT APPLICATION

(21) Application number : **91307451.4**

(22) Date of filing : **13.08.91**

(51) Int. Cl.$^5$ : **C08L 51/00**, C08K 3/34,
C08L 51/06, // C08G69:00,
(C08L51/06, 51:00, 77:00)

(30) Priority : **14.08.90 JP 213664/90**
**14.08.90 JP 213665/90**
**14.08.90 JP 213666/90**
**20.11.90 JP 312800/90**

(43) Date of publication of application :
**26.02.92 Bulletin 92/09**

(84) Designated Contracting States :
**DE FR GB**

(71) Applicant : **UBE INDUSTRIES, LTD.**
**12-32, Nishihonmachi 1-chome**
**Ube-shi, Yamaguchi (JP)**

(71) Applicant : **TOYOTA JIDOSHA KABUSHIKI KAISHA**
**1, Toyota-cho Toyota-shi**
**Aichi-ken (JP)**

(71) Applicant : **KABUSHIKI KAISHA TOYOTA CHUO KENKYUSHO**
**41-1, Aza Yokomichi Oaza Nagakute**
**Nagakute-cho**
**Aichi-gun Aichi-ken, 480-11 (JP)**

(72) Inventor : **Nomura, Takao, c/o Toyota Jidosha K.K.**
**1, Toyota-cho**
**Toyota-shi, Aichi (JP)**

Inventor : **Kawamura, Nobuya, c/o Toyota Jidosha K.K.**
**1, Toyota-cho**
**Toyota-shi, Aichi (JP)**
Inventor : **Tsutsui, Kiyoshi**
**4-42-17, Niwano-dai**
**Sakai-shi, Osaka (JP)**
Inventor : **Nishio, Takeyoshi, c/o Toyota Jidosha K.K.**
**1, Toyota-cho**
**Toyota-shi, Aichi (JP)**
Inventor : **Fukui, Osamu**
**1-12-6, Koshigoe**
**Kamakura-shi, Kanagawa (JP)**
Inventor : **Akagawa, Tomohiko**
**1-1302, Harayama-dai 3 cho**
**Sakai-shi, Osaka (JP)**
Inventor : **Okada, Akane**
**2-333, Momoyama-cho**
**Obu-shi, Aichi (JP)**
Inventor : **Sakai, Ikunori, Ube Industries Ltd.**
**Ryonan-ryo, 1350, Fukaishimizu-machi**
**Sakai-shi, Osaka (JP)**
Inventor : **Deguchi, Ryuichi**
**Osawanishi, Nishikiwa-ku**
**Ube-shi, Yamaguchi (JP)**

(74) Representative : **Adams, William Gordon et al**
**RAWORTH, MOSS & COOK 36 Sydenham Road**
**Croydon Surrey CR0 2EF (GB)**

(54) **Reinforced elastomer composition and polypropylene composition containing same.**

(57) A reinforced thermoplastic elastomer composition comprising :
(i) 40-95% by weight of a modified elastomer (b) obtained by treating an elastomer with an $\underline{\alpha,\beta}$ unsaturated carboxylic acid or a derivative thereof to modify at least a part of the elastomer, and
(ii) 60-5% by weight of a clay-polyamide composite and polypropylene compositions containing the same and having a high impact resistance, rigidity, heat dresistance, and damage resistance.

EP 0 472 344 A2

## BACKGROUND OF THE INVENTION

### 1. Field of the Invention

The present invention relates to a thermoplastic reinforced elastomer composition, and more specifically, relates to a thermoplastic reinforced composition having an excellent mechanical strength, heat resistance, weatherability, oil resistance and molding processability, which comprises an elastomer and a modified polyamide hybridized by a clay mineral.

The present invention also relates to a polypropylene composition, and more specifically, relates to a polypropylene composition having an excellent impact resistance, rigidity, heat resistance and damage resistance, which is obtained by incorporating into polypropylene a finely dispersed thermoplastic reinforced elastomer comprising a modified polyamide hybridized with a clay mineral. Furthermore, the present invention relates to a polypropylene composition for high-impact parts, (e.g., bumpers) having an especially excellent rigidity, heat resistance, impact resistance, damage resistance and dimensional stability, and to a polypropylene composition for high-rigidity parts, (e.g., automobile instrument panels and center consoles) having an excellent rigidity, heat resistance, damage resistance and impact resistance, which are formed by incorporating in a polypropylene a different amount of an inorganic filler and a reinforced elastomer having finely dispersed therein a modified polyamide hybridized by a clay mineral.

### 2. Description of the Related Art

A variety of thermoplastic elastomers are used in various fields as substitutes for vulcanized rubbers, but in practice these elastomers involve various problems in the improvement of the mechanical strength, heat resistance, weatherability, oil resistance and molding processability thereof. As the means for improving the mechanical strength or heat resistance, there is generally known a method of incorporating an inorganic filler into a vulcanized rubber, but the composition according to this method is defective in that a good balance cannot be maintained among the elasticity, molding processability and mechanical strength. As the means for improving the oil resistance, a method of incorporating a polyamide resin has been reported (see Japanese Unexamined Patent Publication No. 52-150457 or No. 63-41554), and according to this method, not only the oil resistance but also the molding processability, mechanical strength and heat resistance can be improved.

Nevertheless, when a usual polyamide is used, the effect of improving the mechanical strength or heat resistance is not satisfactory, and to obtain a thermoplastic reinforced elastomer having excellent various physical properties such as a mechanical strength, heat resistance and elasticity, by incorporating a polyamide into an elastomer, it is important that the dispersibility of the polyamide in the elastomer should be optimum and the dispersion structure should be such that the performances of the rigid and heat-resistant polyamide are functionally exerted.

On the other hand, since polypropylene has an excellent mechanical strength and molding processability, the polymer is widely used in various fields, but the impact resistance is not sufficient for the production of industrial parts. Accordingly, attempts have been made to improve the poor impact resistance of polypropylene by incorporating an etylene/$\alpha$-olefin copolymer rubber or a styrene type elastomer into polypropylene, but these methods are fatally defective in that the rigidity, heat resistance and damage resistance are greatly reduced. An attempt has been made to improve the impact resistance of polypropylene by incorporating a polyamide into polypropylene (see Japanese Unexamined Patent Publication No. 45-30945), but the improvement obtained by this method is small, and since the amount incorporated of the polyamide necessary for improving the impact resistance is large, a problem of a great reduction of the rigidity due to an absorption of the moisture in the polyamide becomes serious. Still further, there has been reported a method of improving the impact resistance of polypropylene by incorporating a polyamide and an acid-modified elastomer or the like into polypropylene (see Japanese Unexamined Patent Publication No. 59-149940, Japanese Unexamined Patent Publication No. 60-110740 and Japanese Unexamined Patent Publication No. 62-283145). In these compositions, however, the dispersibility of the polyamide and elastomer is not substantially different from the dispersibility in the above-mentioned conventional compositions, and the improvement does not exceed the effects caused by the addition of these compositions.

To improve the impact resistance of polypropylene, the selection of an elastomer or the like having a high impact resistance-improving effect, and to develop a technique of dispersing the elastomer or the like into a polypropylene matrix have been considered important, and it is considered necessary to improve the dispersing technique.

An addition, since a crystalline polypropylene has an excellent surface gloss, heat resistance, damage resistance and mechanical strength, and can be easily molded by injection molding, this crystalline polypropylene

2

is widely used in various fields. Nevertheless, the crystalline polypropylene still has a poor rigidity, heat resistance, dimensional stability, and impact resistance, which are not sufficient for, especially, the production of large-size industrial parts such as automobile bumpers. Accordingly, polypropylene compositions formed by incorporating an inorganic filler and an ethylene/$\alpha$-olefin copolymer rubber or styrene type elastomer into a crystalline polypropylene have been developed for large-size high-impact parts. In these polypropylene compositions, however, the balance between the impact resistance or rigidity and the heat resistance is not sufficiently improved, and since the surface hardness is low, the damage resistance is poor. Attempts have been made to obtain polypropylene compositions having not only an excellent rigidity, heat resistance and impact resistance but also a high resistance to damage. For example, polypropylene-polyamide compositions formed by incorporating a polyamide or the like and a modified elastomer into a crystalline polypropylene have been developed (see, for example, Japanese Unexamined Patent Publication No. 59-149940, Japanese Unexamined Patent Publication No. 60-110740 and Japanese Unexamined Patent Publication No. 62-54743). In these polypropylene-polyamide compositions, the rigidity, heat resistance, impact resistance and surface hardness are high, and the damage resistance is improved. Even the above-mentioned polypropylene-polyamide composition still does not have a sufficient rigidity, heat resistance and impact resistance as the material for a large-size part. Moreover, since this composition comprises a crystalline polypropylene, a polyamide, a plastic such as a modified elastomer and an elastomer component alone, and does not contain an inorganic filler, the composition is defective in that the linear expansion coefficient is large. Because of this defect, a molded article prepared from this polypropylene-polyamide composition shows a large change of the dimension with a change of the temperature of the application environment. This problem is especially serious when the composition is used for a large-size part.

It is generally known that the dimensional stability of a polypropylene or a composition thereof can be improved by the incorporation of an inorganic filler such as talc, but it has been found that, when an inorganic filler is merely incorporated in the above-mentioned polypropylene-polyamide composition, the dispersion structure of the polypropylene in a matrix such as the polyamide or modified elastomer is destroyed and the impact resistance is greatly reduced.

Therefore, only the incorporation of an inorganic filler does not facilitate the application thereof to the production of large-size parts. To greatly and simultaneously improve the rigidity, heat resistance, impact resistance, damage resistance and dimensional stability in a polypropylene or a composition thereof, the selection of an elastomer providing a great improvement of the impact resistance and the dispersion of this elastomer into a polypro- pylene matrix are very important. Furthermore, the dispersion structure in the polypropylene matrix should not be destroyed by an inorganic filler.

## SUMMARY OF THE INVENTION

Accordingly, the objects of the present invention are to eliminate the above-mentioned disadvantage of the conventional elastomer compositions and to provide a thermoplastic reinforced elastomer composition having a greatly improved mechanical strength, heat resistance, oil resistance and molding processability.

Other objects of the present invention are to eliminate the above-mentioned disadvantages of the conventional polypropylene compositions and to provide polypropylene compositions having a greatly improved impact resistance, rigidity, heat resistance, and damage resistance.

Further objects and advantages of the present invention will be apparent from the following description.

In accordance with the first aspect of the present invention, there is provided a reinforced thermoplastic elastomer composition comprising:

(i) 40-95% by weight of a modified elastomer (b) obtained by treating an elastomer with an $\alpha,\beta$ unsaturated carboxylic acid or a derivative thereof, to thereby modify at least a part of the elastomer (a); and

(ii) 60-5% by weight of a clay-polyamide composite (c). In accordance with the second aspect of the present invention, there is provided a polypropylene composition comprising:

(i) 98 to 30% by weight of a modified polypropylene obtained by treating a crystalline polypropylene with an unsaturated carboxylic acid or a derivative thereof, to thereby graft-modify at least a part of the crystalline polypropylene and

(ii) 2 to 70% by weight of the above-mentioned reinforced thermoplastic elastomer composition according to the first aspect of the present invention.

In accordance with the third aspect of the present invention, there is provided a polypropylene composition comprising (i) the above-mentioned polypropylene composition according to the second aspect of the present invention and (ii) an inorganic filler.

3

DESCRIPTION OF THE PREFERRED EMBODIMENTS

In the first aspect of the present invention, the present inventors investigated the provision of a thermoplastic reinforced elastomer composition comprising a polyamide and an elastomer and providing a great improvement of the mechanical strength and heat resistance. As a result, it was found that, where a modified polyamide hybridized by a clay mineral is used, the polyamide shows a high cohesive force with the clay mineral as the center, respective particles of the clay mineral are finely and uniformly dispersed in the elastomer, and there is formed a semi-IPN dispersion structure wherein tens of thousands of polyamide molecule chains three-dimensionally expanded with the clay mineral particles as the center are graft-bonded to the elastomer.

Moreover, it was found that the above-mentioned polyamide is present as physically crosslinking points composed of a physically stable crystalline phase in an amorphous matrix of a soft segment component of the elastomer, and plays an important role of manifesting the stability of mechanical properties, and thus a thermoplastic composition superior to the conventional composition comprising an elastomer and a polyamide can be obtained. The present invention was completed based on these findings.

The thermoplastic elastomer composition according to the first aspect of the present invention is characterized in that the dispersibility in a polymeric compound modified with an unsaturated carboxylic acid and/or a derivative thereof is much higher than that of a usual polyamide, and by using a clay-polyamide composite capable of forming a semi-IPN dispersion structure, the mechanical strength, heat resistance, oil resistance and molding processability are greatly improved. Thus, according to the first aspect of the present invention, there is provided a thermoplastic elastomer composition comprising (i) 40 to 95% by weight of (b) a modified elastomer formed by modifying at least a part of (a) an elastomer with an unsaturated carboxylic acid or a derivative thereof, and (ii) 60 to 5% by weight of (c) a clay-polyamide composite.

In this composition, the elastomer (a) is preferably an ethylene/α-olefin copolymer rubber and/or a styrene type hydrogenated rubber.

Furthermore, according to the present invention, there is provided a thermoplastic elastomer composition as set forth above, which further comprises (iii) 1 to 20 parts by weight of (d) a copolymer of ethylene and/or an α-olefin with an unsaturated carboxylic acid or a derivative thereof and/or an unsaturated epoxy compound per 100 parts by weight of the composition comprising the modified elastomer (i)-(b) and the clay-polyamide composite (ii)-(c).

In the above-mentioned composition, the grafting amount of the modified elastomer (b) is preferably 0.01 to 10% by weight based on the modified elastomer.

The modified elastomer used as the component (b) in the present invention can be a modified elastomer formed by modifying an ethylene/α-olefin copolymer rubber or styrene type hydrogenated rubber with an unsaturated carboxylic acid or a derivative thereof, and/or a mixture of this modified rubber with the elastomer component (a).

The ethylene/α-olefin copolymer rubber used in the present invention is an ethylene/α-olefin copolymer rubber having an ethylene content of 30 to 95% by weight, preferably 60 to 90% by weight. As the α-olefin, there can be mentioned α-olefins having 3 to 20 carbon atoms, such as propylene, 1-butene, 1-pentene, 1-hexene, 4-methyl-1-pentene and 1-decene. These α-olefins can be used alone or in the form of a mixture of two or more thereof. In some cases, a minute amount of a diene component may be contained in the copolymer rubber.

The modified ethylene/α-olefin copolymer rubber used in the present invention can be obtained by graft-modifying an ethylene/α-olefin copolymer rubber as mentioned above. An unsaturated carboxylic acid and a derivative thereof can be used as the graft-modifying starting monomer. As the unsaturated carboxylic acid and derivative thereof, there can be used acrylic acid, methacrylic acid, maleic acid, itaconic acid, fumaric acid, citraconic acid, crotonic acid, glycidyl methacrylate, 2-hydroxyethyl methacrylate, polyethylene glycol dimethacrylate, N-methylolmethacrylamide, calcium methacrylate, γ-methacryloxy-propyltrimethoxysilane, acrylamide, methacrylamide, maleic anhydride, itaconic anhydride and citraconic anhydride. An acid anhydride such as maleic anhydride or itaconic anhydride is preferably used.

A radical-generating compound such as an organic peroxide can be used as the initiator for the graft-modifying reaction. In some cases, the graft modification can be caused by a heat treatment without using a reaction initiator. The kind of the reaction initiator used is not particularly critical, and any reaction initiators which have a half-value period of 1 minute and in which the decomposition temperature required for this half-value period is lower than 250°C can be used. Organic peroxides such as a hydroperoxide, a dialkyl peroxide and a peroxy ester can be mentioned as the reaction initiator of this type.

As the organic peroxide used in the present invention, there can be mentioned, for example, t-butyl peroxybenzoate, cyclohexanone peroxide, 2,5-dimethyl-2,5-di(benzoylperoxy)hexane, t-butyl peroxyacetate, methylethylketone peroxide, dicumyl peroxide and 2,5-dimethyl-2,5-di(t-butylperoxy)hexane. An appropriate initiator is selected and used according to the reaction conditions and the like.

The modified ethylene/$\alpha$-olefin copolymer rubber used in the present invention can be prepared by heating, mixing and stirring the starting ethylene/$\alpha$-olefin copolymer rubber and the graft-modifying starting monomer in the form of a solution in the presence of an initiator, or by heating and melt-kneading the starting ethylene/$\alpha$-olefin copolymer rubber and graft-modifying the starting monomer. The mixing ratios of the starting materials and the reaction conditions for the production of the modified ethylene/$\alpha$-olefin copolymer rubber are selected so that the starting monomer grafting ratio is about 0.01 to about 10% by weight, preferably about 0.1 to about 3.0% by weight, and the melt index of the obtained modified copolymer rubber is about 0.01 to about 50 g/10 min, preferably 0.05 to 15 g/10 min. If the monomer graft-modifying ratio of the modified ethylene/$\alpha$-olefin copolymer rubber is lower than 0.01% by weight, no modifying effect is attained, and if the graft-modifying ratio exceeds 10% by weight, the crosslinking degree of the rubber is increased at the graft-modifying step, and melt mixing with the modified polyamide becomes difficult.

The styrene type hydrogenated rubber is a hydrogenated derivative obtained by hydrogenating a block copolymer represented by the general formula of A-(B-A)$_n$ wherein A represents a polymer block of a monovinyl substituted aromatic hydrocarbon and B represents an elastomeric polymer block of a conjugated diene, and n is an integer of from 1 to 5. The monovinyl substituted aromatic hydrocarbon as the monomer constituting the polymer block A is preferably styrene, but a lower alkyl substituted styrene, such as $\alpha$-methylstyrene or vinyltoluene, or vinylnaphthalene substituted styrene, can be similarly used. Butadiene or isoprene is preferably used as the conjugated diene monomer in the polymer block B, or a mixture of butadiene and isoprene also can be used. When butadiene alone is used as the conjugated diene monomer for the formation of the polymer block B, in order to maintain the elastomeric characteristics after the saturation of double bonds by the hydrogenation of the block copolymer, preferably the polymerization conditions are selected so that the 1,2-micro-structure occupies 20 to 50% of the micro-structure in the polybutadiene block. More preferably, the 1,2-micro-structure occupies 35 to 45% of the entire micro-structure. Preferably, the weight average molecular weight of the polymer block A in the block copolymer is 5,000 to 125,000, and the weight average molecular weight of the polymer block B is 15,000 to 250,000.

Many processes have been proposed for the production of these block copolymers, and as a typical instance there can be mentioned a process disclosed in Japanese Examined Patent Publication No. 40-23798, in which a block copolymerization is carried out in a lithium solvent or by using a Ziegler catalyst in an inert solvent.

The block copolymer can be hydrogenated in the presence of a catalyst in an inert solvent according to a process disclosed, for example, in Japanese Examined Patent Publication No. 42-8704, No. 43-6636 or No. 46-20814. By this hydrogenation, at least 50%, preferably at least 80%, of the olefinic double bond in the polymer block B is hydrogenated, and up to 25% of the aromatic unsaturated bond in the polymer block A is hydrogenated. As specific examples of the block copolymer, there can be mentioned a copolymer (SEBS) formed by hydrogenating a styrene/butadiene/styrene copolymer (SBS), and a copolymer (SEPS) obtained by hydrogenating a styrene/isoprene/styrene copolymer (SIS). The graft-modifying starting monomer, the graft-modifying reaction initiator, the preparation process, and the kind and grafting ratio of the graft-modifying starting monomer are the same as those described above with respect to the modified ethylene/$\alpha$-olefin copolymer rubber. The above-mentioned modified styrene type hydrogenated block copolymer rubber and modified ethylene/$\alpha$-olefin copolymer rubber can be used alone, or they can be used in combination with an ethylene/$\alpha$-olefin copolymer rubber and/or a styrene type hydrogenated block copolymer rubber within a range such that the grafted amount of the unsaturated carboxylic acid or the derivative thereof is at least 0.01 part by weight per 100 parts by weight of the elastomer.

The clay-polyamide composite used as the component (c) in the present invention is obtained by uniformly dispersing and integrating 0.05 to 10 parts by weight, preferably 0.1 to 7 parts by weight, of a specific clay mineral into 100 parts by weight of a polyamide, whereby the heat resistance and rigidity are greatly improved. If the proportion of the clay mineral is lower than 0.05 part by weight, the heat resistance or rigidity is not substantially improved, and if the proportion of the clay mineral exceeds 10 parts by weight, the flowability is greatly reduced at the melting step, and an injection molding becomes impossible. As the polyamide resin used for the clay-polyamide composite of the present invention, there can be mentioned a polyamide obtained by polycondensation of an aliphatic, alicyclic or aromatic diamine with an aliphatic, alicyclic or aromatic dicarboxylic acid, a polyamide obtained from a lactam, a polyamide obtained by condensation of an aminocarboxylic acid and a copolyamide composed of these components. As specific examples, there can be mentioned nylon-6, nylon-6,6, nylon-6,10, nylon-9, nylon-11, nylon-12, nylon-6/6,6, and nylon-12,12.

The clay mineral for modifying the above-mentioned polyamide resin is composed mainly of a lamellar silicate, and in general, the silicate has a shape such that the length of one side is 0.002 to 1 $\mu$m and the thickness is 6 to 20 Å. As the starting material of this lamellar silicate, there can be mentioned a lamellar phyllosilicate mineral composed of magnesium silicate or aluminum silicate. As specific examples, there can be mentioned smectite type clay minerals such as montmorillonite, saponite, beidellite, nontronite, hectorite and stevensite, and vermiculite and halloysite. These minerals may be natural products or synthetic products, and of these minerals, montmorillonite is especially preferably used. Preferably, the respective silicate lamellae are uniformly dispersed in the polyamide in such a manner that the average distance between every two adjacent lamellae is at least 20 Å. The method of dispersing the lamellar silicate in the polyamide resin is not particularly critical, but where the starting material of the lamellar silicate is a multi-layer clay mineral, a method can be adopted in which the starting material is first brought into contact with a swelling agent to expand the space between layers and facilitate an inclusion of the monomer between layers, and then the starting material is mixed with a monomer of the polyamide and polymerization is carried out (see, for example, Japanese Unexamined Patent Publication No. 62-64827, No. 62-72723 or No. 62-74957). Furthermore, there can be adopted a method in which a polymeric compound is used as the swelling agent to increase the distance between layers to at least 100 Å and the clay material is melt-mixed with a polyamide resin. In the modified polyamide thus modified with the clay mineral, the molecule chains of the polyamide are three-dimentionally expanded from between respective layers of the clay mineral to manifest a high cohesive force with the clay mineral as the center, with the result that the heat resistance and rigidity are greatly improved.

The component (d) used in the present invention is a modified copolymer of ethylene and/or an α-olefin copolymer, having at least one functional group. The modified ethylene and/or α-olefin copolymer can be prepared by graft-reacting a (co)polymer of ethylene and/or an α-olefin having 3 to 20 carbon atoms with an unsaturated carboxylic acid or a derivative thereof or an unsaturated epoxy compound. As the α-olefin other than ethylene, there can be mentioned propylene, 1-butene, 1-pentene, 1-hexene, 4-methyl-1-pentene, 1-octene and 1-decene. As specific examples of the unsaturated carboxylic acid and the derivative thereof used in the present invention, there can be mentioned unsaturated carboxylic acids such as acrylic acid, methacrylic acid, maleic acid, fumaric acid, itaconic acid, citraconic acid and tetrahydrophthalic acid, unsaturated carboxylic anhydrides such as maleic anhydride, itaconic anhydride, citraconic anhydride and tetrahydrophthalic anhydride, and unsaturated carboxylic acid esters such as methyl acrylate, methyl methacrylate, dimethyl maleate and monomethyl maleate. As the unsaturated epoxy compound, there can be mentioned, for example, glycidyl esters of unsaturated monocarboxylic acids, such as glycidyl acrylate and glycidyl methacrylate, and monoglycidyl esters and polyglycidyl esters of unsaturated polycarboxylic acids such as maleic acid, itaconic acid and citraconic acid.

Various known methods can be adopted for polymerizing a (co)polymer of ethylene and/or an α-olefin with an unsaturated carboxylic acid or a derivative thereof. For example, there can be adopted a method in which the (co)polymer is melted and the grafting monomer is added to effect graft copolymerization, and a method in which the grafting monomer dissolved in a solvent is added to the (co)polymer to effect copolymerization. The copolymerization with the unsaturated epoxy compound is accomplished according to a method in which at least one member selected from the above-mentioned α-olefins is copolymerized with an unsaturated epoxy monomer having one ethylenically unsaturated bond and one epoxy group in the molecule by using a radical initiator, or a method in which a (co)polymer of ethylene and/or an α-olefin is grafted with an unsaturated epoxy compound. As especially preferred examples of the modified ethylene and/or α-olefin copolymer, there can be mentioned an ethylene/ethyl methacrylate/maleic anhydride copolymer, an ethylene/glycidyl methacrylate copolymer, and a maleic anhydride-modified polypropylene.

The grafting amount of the unsaturated carboxylic acid or its derivative or the unsaturated epoxy compound is preferably 0.3 to 10% by weight. If the grafting amount is smaller than 0.1% by weight, the effect of improving the compatibility with the modified polyamide resin is very low, and therefore, no improvement of the mechanical strength is obtained. If the grafting amount exceeds 10% by weight, crosslinking of the copolymer with the modified polyamide partially occur, and the surface appearance and processability of the composition of the modified elastomer and modified polyamide become poor.

The thermoplastic reinforced elastomer of the present invention comprises 40 to 95% by weight of (b) a modified elastomer formed by modifying a part or all of an ethylene/α-olefin copolymer rubber and/or a styrene type hydrogenated block copolymer rubber with an unsaturated carboxylic acid or a derivative thereof and 60 to 5% by weight of a polyamide modified with a clay mineral. If the amount of the component (b) is smaller than 40% by weight, the composition becomes an islands-in-sea dispersion structure where the modified polyamide constitutes the sea, and the rubbery characteristics represented by the hardness are lost. In contrast, if the amount of the component (b) is larger than 95% by weight, the effect of improving the rigidity, heat resistance and processability by the modified polyamide is not obtained.

The reinforced elastomer composition of the present invention is formed by incorporating 1 to 20 parts by weight of (d) a copolymer of ethylene and/or an α-olefin with an unsaturated carboxylic acid or a derivative thereof and/or an unsaturated epoxy compound into 100 parts by weight of the composition comprising the above-mentioned components (b) and (c). If the amount of the component (d) is smaller than 1 part by weight, the effect of improving the physical properties by an enhancement of the dispersibility of the modified polyamide in the reinforced elastomer is not manifested. If the amount of the component (d) is larger than 20 parts by weight, the processing moldability is drastically degraded, and the rubbery characteristics are lost.

The thermoplastic reinforced elastomer of the present invention is obtained by dry-blending the modified elastomer (b) and the clay-polyamide composite (c) optionally with the copolymer (d) of ethylene and/or the α-olefin with the unsaturated carboxylic acid or its derivative and/or the unsaturated epoxy compound within the above-mentioned mixing ratio range by known means such as a Henschel mixer, a V-blender, a ribbon blender or a tumbler blender, melt-mixing the blend by a single-screw extruder, a twin-screw extruder, a twin-screw extruder having a feed opening in a cylinder portion besides a usual feed opening, a kneader or a Banbury mixer, and pelletizing the molten mixture.

The thermoplastic resin composition of the present invention may further comprise ordinary additives such as an antioxidant, an ultraviolet absorbent, a lubricant, a pigment, an antistatic agent, a copper damage-preventing agent, a flame retardant, a neutralizing agent, a plasticizer, a nucleating agent, a dye, a foaming agent and a slip agent, as long as the attaining of the objects of the present invention is not hindered.

According to the first aspect of the present invention, in a thermoplastic elastomer formed by incorporating a polyamide in an elastomer, by using a clay-polyamide composite, which has a high heat resistance, high rigidity and high molecular cohesive force, the dispersibility of the polyamide is greatly improved, and furthermore, by using a modified elastomer, the heat resistance and mechanical strength of the elastomer composition are greatly improved.

The novel composition provided according to the present invention can be molded by any molding methods customarily adopted for usual thermoplastic resins, and the composition has an excellent heat resistance, mechanical strength and oil resistance and can be advantageously used for the production of automobile parts such as tubes, guards, boot bumpers and fenders and various industrial machine parts such as hoses and gaskets, and can be used as an impact strength improver for various resins represented by polyolefins.

In the second aspect of the present invention, the present inventors carried out research into an impact strength improver capable of greatly improving the impact resistance of polypropylene without reducing the rigidity, heat resistance, damage resistance and water resistance inherently possessed by polypropylene, and into a technique of dispersing this impact resistance improver.

As a result, the inventors found that if a reinforced elastomer which has been first rendered rigid and tough by finely and uniformly dispersing a clay-polyamide composite into an elastomer is used as the impact resistance improver, the dispersion of the improver into the polypropylene matrix is enhanced by the compatibility of the modified polyamide as one component of the reinforced elastomer with the modified polypropylene, and in this reinforced elastomer, there is formed a semi-IPN dispersion structure by graft bonding between the elastomer and the polyamide molecule chain three-dimensionally expanded, with the clay mineral as the center. Accordingly, when the elastomer is incorporated into polypropylene, the elastomer is dispersed in the polypropylene matrix surrounding fine particles of the polyamide, and the impact resistance is greatly improved without a reduction of the rigidity, heat resistance and damage resistance. Thus, the present invention was completed based on these findings.

The polypropylene composition of the present invention is characterized in that, by using a reinforced elastomer which is rigid and tough and is superior to the conventional elastomers in the dispersibility thereof in polypropylene modified with an unsaturated carboxylic acid and/or a derivative thereof, the impact resistance, rigidity, heat resistance and damage resistance are greatly improved. Thus, according to the second aspect of the present invention, there is provided a polypropylene composition comprising (i) 98 to 30% by weight of (b) a modified polypropylene formed by graft-modifying at least a part of (a) a crystalline polypropylene with an unsaturated carboxylic acid or a derivative thereof, and (ii) 2 to 70% by weight of (c) the above-mentioned reinforced elastomer composition.

In the second aspect of the present invention, the above-mentioned thermoplastic reinforced elastomer composition according to the first aspect of the present invention is used as the above-mentioned component (ii).

A crystalline homopolymer of propylene, a random or block copolymer of propylene with ethylene, and a mixture thereof, each of which has a melt index of 0.3 to 70 g/10 min (determined at 230°C under a load of 2160 g according to D-1238), is used as the crystalline polypropylene (a).

In the ethylene/propylene copolymer used in the present invention, the ethylene content is preferably up to 6% by weight in the case of a random copolymer, and 3 to 15% by weight in the case of a block copolymer.

The modified polypropylene component (b) used in the present invention can be obtained by graft-modifying the above-mentioned crystalline polypropylene. An unsaturated carboxylic acid and a derivative thereof can be used as the monomer for graft-modifying the crystalline polypropylene.

As the unsaturated carboxylic acid and derivative thereof, there can be used acrylic acid, methacrylic acid,

EP 0 472 344 A2

maleic acid, itaconic acid, fumaric acid, citraconic acid, crotonic acid, glycidyl dimethacrylate, 2-hydroxyethyl methacrylate, polyethylene glycol dimethacrylate, N-methylolmethacrylamide, calcium methacrylate, $\gamma$-methacryloxy-propyltrimethoxysilane, acrylamide, methacrylamide, maleic anhydride, itaconic anhydride and citraconic anhydride. An acid anhydride such as maleic anhydride or itaconic anhydride is preferably used.

A radical-generating compound such as an organic peroxide can be used as the initiator for the graft-modifying reaction. In some cases, the graft modification can be caused by a heat treatment without using a reaction initiator. The kind of the reaction initiator used is not particularly critical, and any reaction initiators which have a half-value period of 1 minute and in which the decomposition temperature required for this half-value period is lower than 250°C can be used. Organic peroxides such as a hydroperoxide, a dialkyl peroxide and a peroxy ester can be mentioned as the reaction initiator of this type. As the organic peroxide used in the present invention, there can be mentioned, for example, t-butyl peroxybenzoate, cyclohexanone peroxide, 2,5-dimethyl-2,5-di(benzoylperoxy) hexane, t-butyl peroxyacetate, methylethylketone peroxide, dicumyl peroxide and 2,5-dimethyl-2,5-di(t-butylperoxy)hexane. An appropriate initiator is selected and used according to the reaction conditions and the like.

The graft-modified crystalline polypropylene can be obtained either by mixing the crystalline polypropylene with the modifying starting monomer and the above-mentioned reaction initiator and melt-kneading the mixture in a nitrogen atmosphere or in air, or by dissolving the crystalline polypropylene under heat and pressure into toluene or xylene and stirring and mixing the solution while dropping the modifying starting monomer and the reaction initiator into the solution.

The melt mixing can be performed by a kneading machine such as a twin-screw extruder, a kneader or a Banbury mixer, but usually a single-screw extruder is used for melt kneading. The mixing is carried out at a temperature higher than the melting point of the starting polypropylene, usually at a temperature of 175 to 280°C. The melt kneading time depends on the starting materials and the like, but in general the melt kneading is conducted for about 1 to about 20 minutes.

The mixing ratio of the starting materials is such that the amount of the starting modifying monomer is about 0.05 to 3.0 parts by weight and the amount of the reaction initiator is about 0.002 to about 1 part by weight per 100 parts by weight of the starting polypropylene. If the amount of the monomer is smaller than about 0.05 part by weight, no modifying effect is obtained, and if the amount of the monomer exceeds 3 parts by weight, the grafting efficiency of the monomer is greatly reduced and the amount of the unreacted monomer is increased, and therefore, good results can not be obtained.

In the modified polypropylene obtained in the above-mentioned manner, the monomer-grafting ratio is at least about 0.03% by weight, preferably about 0.1 to about 5.0% by weight, and the melt index is preferably about 0.5 to about 200 g/10 min. If the melt index is smaller than 0.5 g/10 min, the molding processability often becomes poor, and if the melt index exceeds 200 g/10 min, the molecular weight becomes too low and a material having desirable properties cannot be obtained.

The modified polypropylene can be used alone, or the modified polypropylene can be used in combination with an unmodified crystalline polypropylene within such a range that the grafted amount of the unsaturated carboxylic acid or derivative thereof is larger than 0.03 parts by weight per 100 parts by weight of the polypropylene.

The polypropylene composition according to the second aspect of the present invention comprises 30 to 98%, preferably 30 to 95% by weight, of (b) a modified polypropylene formed by modifying at least part of (a) a crystalline polypropylene with an unsaturated carboxylic acid or a derivative thereof, and 2 to 70% by weight, preferably 5 to 70% by weight, of (c) a reinforced elastomer composition comprising (d) a modified elastomer and (e) a clay-polyamide composite.

If the content of the reinforced elastomer composition (c) exceeds 70% by weight, the polypropylene composition becomes an islands-in-sea dispersion structure where the elastomer constitutes the sea, and therefore, the rigidity, heat resistance and damage resistance are greatly reduced. In contrast, if the content of the reinforced elastomer (c) is lower than 2% by weight a sufficient improvement of the impact resistance can not be attained.

In the polypropylene composition of the present invention, the reinforced elastomer composition (c) comprises 40 to 95% by weight, preferably 40 to 80% by weight, of (d) a modified elastomer formed by modification with an unsaturated carboxylic acid or a derivative thereof, and 60 to 5% by weight, preferably 60 to 20% by weight, of (e) a clay-polyamide composite. If the content of the clay-polyamide composite (e) exceeds 60% by weight, the reinforced elastomer composition becomes an islands-in-sea dispersion structure in which the clay-polyamide composite (e) constitutes the sea, and the effect of improving the impact resistance of the obtained polypropylene composition is not satisfactory. If the content of the clay-polyamide composite (e) is lower than 5% by weight, no improvement of the rigidity, heat resistance and damage resistance can be obtained.

The polypropylene composition, according to the second aspect of the present invention is formed by incorporating 1 to 20 parts by weight of (f) a copolymer of ethylene and/or an α-olefin with an unsaturated carboxylic acid or a derivative thereof and/or an unsaturated epoxy compound into 100 parts by weight of the composition (c) comprising the above-mentioned components (d) and (e). If the amount of the component (f) is smaller than 1 part by weight, the effect of improving the physical properties by an enhancement of the dispersibility of the modified polyamide in the reinforced elastomer (c) is not manifested. If the amount of the component (f) is larger than 20 parts by weight, the heat resistance is greatly reduced, and therefore, good results can not be obtained in the polypropylene composition.

The polypropylene composition of the present invention can be prepared by known procedures, except that the reinforced elastomer composition is first prepared and then the polypropylene composition is prepared.

The reinforced elastomer is obtained by dry-blending the modified elastomer (d) and the clay-polyamide composite (e) optionally with the copolymer (f) of ethylene and/or the α-olefin with the unsaturated carboxylic acid or its derivative and/or the unsaturated epoxy compound within the above-mentioned mixing ratio range by known means such as a Henschel mixer, a V-blender, a ribbon blender or a tumbler blender, melt-mixing the blend by a single-screw extruder, a twin-screw extruder, a kneader or a Banbury mixer, and pelletizing the molten mixture.

Then, the polypropylene composition is prepared by melt-mixing the reinforced elastomer and the modified polypropylene within the above-mentioned mixing ratio range and pelletizing the molten mixture.

To simplify or omit the kneading step, the step of preparing the reinforced elastomer composition in advance can be included into the step of preparing the polypropylene composition of the present invention. More specifically, the polypropylene composition of the present invention can be prepared by forming the reinforced elastomer at the first step and charging the modified polypropylene into the molten reinforced elastomer at the second step. To carry out this process effectively, preferably a twin-screw extruder having a high L/D ratio and comprising a starting material feed opening in the cylinder portion, in addition to a usual starting material feed opening, is used.

The thermoplastic resin composition of the present invention may further comprise usual additives such as an antioxidant, an ultraviolet absorbent, a lubricant, a pigment, an antistatic agent, a copper damage-preventing agent, a flame retardant, a neutralizing agent, a plasticizer, a uncleating agent, a dye, a foaming agent and a slip agent, as long as the attaining of the objects of the present invention is not hindered.

According to the second aspect of the present invention, by incorporating into polypropylene a reinforced elastomer rendered rigid and tough by finely and uniformly dispersing a modified polyamide hybridized by a clay mineral as an impact strength improver, the impact strength can be improved without a reduction of the rigidity, heat resistance and mechanical strength of the polypropylene.

The novel composition provided according to the second aspect of the present invention can be molded by known molding methods such as injection molding and extrusion molding, and the composition has an excellent rigidity, heat resistance, damage resistance and impact resistance and is preferably used for the production of automobile inner and outer parts, such as a fender, a bumper, wheel cap, a spoiler, an instrument panel and a trim and for the production of household electric appliances, machine parts, other industrial parts and products for which a heat resistance, impact resistance and damage resistance are required.

In the third aspect of the present invention, a polypropylene composition for high-impact parts (i.e., the first embodiment) and a polypropylene composition for high-rigidity parts (i.e., the second embodiment) are provided.

In the third aspect of the present invention, the present inventors investigated an impact resistance improver having a high impact resistance-improving effect in a composition comprising a polypropylene and an inorganic filler, and not causing a substantial reduction of the rigidity, and a technique of dispersing this impact resistance improver.

As a result, the inventors made the following findings. Namely, if a reinforced elastomer which has been rendered rigid and tough in advance by finely and uniformly dispersing a clay-polyamide composite into an elastomer is used as the impact resistance improver, the dispersion of the improver into the polypropylene matrix is enhanced by the compatibility of the modified polyamide as one component of the reinforced elastomer with the modified polypropylene, and in this reinforced elastomer, a semi-IPN dispersion structure is formed by a graft bonding between the elastomer and the polyamide molecule chain three-dimensionally expanded with the clay mineral as the center. Accordingly, when the elastomer is incorporated into polypropylene, the elastomer is dispersed in the polypropylene matrix surrounding fine particles of the polyamide to greatly improve the impact resistance. Furthermore, due to a high cohesive force of the modified polyamide, the dispersion structure is not destroyed even if an inorganic filler such as talc is incorporated, and there can be obtained a polypropylene composition for high impact or high rigidity parts which is superior to the conventional compositions in the balance in the rigidity, heat resistance, damage resistance and impact resistance thereof. The present invention was completed based on these findings.

The polypropylene composition according to the third aspect of the present invention is characterized in that, by using a reinforced elastomer which is rigid and tough and is superior to the conventional elastomers in the dispersibility thereof in a polypropylene modified with an unsaturated carboxylic acid or a derivative thereof, and which has a dispersion structure that is not destroyed even by an incorporation of an inorganic filler, the rigidity, heat resistance, impact resistance, damage resistance and dimensional stability are greatly improved.

According to the first embodiment of the third aspect of the present invention, there is provided a polypropylene composition comprising (i) 100 parts by weight of the above-mentioned polypropylene composition according to the second aspect of the present invention and (ii) 1 part by weight to less than 15 parts by weight of an inorganic filler.

According to the second embodiment of the third aspect of present invention, there is provided a polypropylene composition comprising (i) 100 parts by weight of the above-mentioned polypropylene composition according to the second aspect of the present invention and (ii) 15 part by weight to less than 70 parts by weight of an inorganic filler.

In the third aspect of the present invention, the above-mentioned polypropylene composition according to the second aspect of the present invention are used as the component (i).

As the inorganic filler used as the component (ii) in the third aspect of the present invention, there can be mentioned powdery fillers of oxides such as alumina, magnesium oxide, calcium oxide and zinc flower, hydrated metal oxides such as aluminum hydroxide, magnesium hydroxide and calcium hydroxide, carbonates such as calcium carbonate and magnesium carbonate, silicates such as talc, clay and bentonite, borates such as barium borate, phosphates such as aluminum phosphate, sulfates such as barium sulfate and mixtures of two or more of them, fibrous fillers such as glass fiber, potassium titanate fiber, ceramic fiber, wollastonite, carbon fiber, SUS fiber and magnesium oxysulfate fiber and glass beads, glass flakes and mica. The surface of the inorganic filler can be treated with a silane compound such as vinylethoxysilane, 2-aminopropyltrimethoxysilane or 2-glycidoxypropylmethoxysilane, or a titanate compound. Of these inorganic fillers, talc is preferably used as the powderly filler, and glass fiber is preferably used as the fibrous filler.

The polypropylene composition for high-impact parts according to the first embodiment of the third aspect of the present invention comprises 100 parts by weight of (c) a polypropylene resin composition comprising 98 to 30% by weight, preferably 90 to 50% by weight, of (a) a modified polypropylene formed by modifying at least a part of (e) a crystalline polypropylene with an unsaturated carboxylic acid or derivative thereof and 2 to 70% by weight, preferably 10 to 50% by weight, of (b) a reinforcing elastomer composition comprising (g) a modified elastomer and (h) a modified polyamide hybridized by a clay mineral, and 1 to less than 15 parts by weight, preferably 5 to less than 15 parts by weight of (d) an inorganic filler.

If the amount of the inorganic filler (d) is smaller than 1 part by weight per 100 parts by weight of the polypropylene resin composition (c), no effect of improving the dimensional stability is attained, and if the amount of the inorganic filler is larger than 15 parts by weight, the damage resistance is reduced by the presence of the inorganic filler and appearance defects such as flow marks are formed in the obtained injection-molded article.

If the content of the reinforced elastomer (b) is lower than 2% by weight in the polypropylene composition (c), a sufficient improvement of the impact strength, required for the polypropylene composition for high-impact parts, cannot be obtained. In contrast, if the content of the reinforced elastomer exceeds 70% by weight, the polypropylene resin composition (c) becomes an islands-in-sea dispersion structure in which the elastomer constitutes the sea, and even if the filler is incorporated, the rigidity, heat resistance and damage resistance are greatly reduced.

In the polypropylene resin composition (c), the reinforced elastomer composition (b) comprises 40 to 95% by weight, preferably 40 to 80% by weight, of (g) a modified elastomer formed by modification with an unsaturated carboxylic acid or a derivative thereof, and 60 to 5% by weight, preferably 60 to 20% by weight, of (h) a modified polyamide formed by modification with a clay mineral. If the content of the modified polyamide (h) exceeds 60% by weight, the reinforced elastomer composition becomes an islands-in-sea dispersion structure in which the modified polyamide (h) constitutes the sea, and the effect of improving the impact resistance by incorporation of the reinforced elastomer (b) is not satisfactory. If the content of the modified polyamide (h) is lower than 5% by weight, no substantial improvement of the rigidity, heat resistance and damage resistance can be obtained.

The composition of the present invention is formed by incorporating 1 to 20 parts by weight of (i) a copolymer of ethylene and/or an α-olefin with an unsaturated carboxylic acid or a derivative thereof and/or an unsaturated epoxy compound into 100 parts by weight of the composition (b) comprising the above-mentioned components (g) and (h). If the amount of the component (i) is smaller than 1 part by weight, the effect of improving the physical properties by enhancement of the dispersibility of the modified polyamide in the reinforced elastomer (b) is not manifested. If the amount of the component (i) is larger than 20 parts by weight, the molding processability is greatly reduced, and therefore, good results can not be obtained in the polypropylene composition.

The polypropylene composition for high-impact parts according to the present invention can be prepared by known procedures except that the reinforced elastomer composition (b) is first prepared and then the polypropylene composition is prepared.

The reinforced elastomer (b) is obtained by dryblending the modified elastomer (g) and the clay-polyamide composite (h) optionally with the copolymer (i) of ethylene and/or the α-olefin with the unsaturated carboxylic acid or its derivative and/or the unsaturated epoxy compound within the above-mentioned mixing ratio range by known means such as a Henschel mixer, a V-blender, a ribbon blender or a tumbler blender, melt-mixing the blend by a single-screw extruder, a twin-screw extruder, a kneader or a Banbury mixer, and pelletizing the molten mixture.

Then the polypropylene composition is prepared by melt-mixing the reinforced elastomer (b), the modified polypropylene (a) and the inorganic filler within the above-mentioned mixing ratio range, and pelletizing the molten mixture.

To simplify or omit the kneading step, the step of preparing the reinforced elastomer composition (b) in advance can be included in the step of preparing the polypropylene composition of the present invention. More specifically, the polypropylene composition of the present invention can be prepared by forming the reinforced elastomer (b) at the first step and charging the modified polypropylene (a) and the inorganic filler into the molten reinforced elastomer at the second step. Furthermore, there can be adopted a process in which the modified polypropylene (a) is melt-mixed with the inorganic filler (d) at the first step and the reinforced elastomer (b) is charged into the molten mixture at the second step. To carry out these processes effectively, preferably a twin-screw extruder having a high L/D ratio and comprising a starting material feed opening in the cylinder portion, in addition to a usual starting material feed opening, is used.

The thermoplastic resin composition of the present invention may further comprise usual additives such as an antioxidant, an ultraviolet absorbent, a lubricant, a pigment, an antistatic agent, a copper damage-preventing agent, a flame retardant, a neutralizing agent, a plasticizer, a nucleating agent, a dye, a foaming agent and a slip agent, as long as the attaining of the objects of the present invention is not hindered.

According to the first embodiment of the third aspect of the present invention, by using a rigid and tough reinforced elastomer formed by incorporating in advance in an elastomer a clay-polyamide composite as an impact strength improver for a polypropylene, and further incorporating an inorganic filler, the impact strength and dimensional precision of the polypropylene composition are improved without a reduction of the rigidity, heat resistance, damage resistance and mechanical strength of the polypropylene composition.

The novel composition provided according to the first embodiment of the third aspect of the present invention can be molded by known molding methods such as injection molding and extrusion molding, and the composition has an excellent rigidity, heat resistance, damage resistance and impact strength and is preferably used for the production of automobile inner and outer parts, such as a fender, a bumper, a wheel cap, a spoiler, an dashboard and a trim, and for the production of household electric appliances, machine parts, other industrial parts and products for which a heat resistance impact resistance and damage resistance are required.

The polypropylene composition for high-rigidity parts according to the second embodiment of the third aspect of the present invention comprises 100 parts by weight of a polypropylene resin composition comprising 98 to 30% by weight, preferably 90 to 60% by weight, of a polypropylene and 2 to 70% by weight, preferably 10 to 40% by weight of a thermoplastic elastomer composition comprising a clay-polyamide composite and an elastomer, and 15 to less than 70 parts by weight of an inorganic filler. If the amount incorporated of the inorganic filler is smaller than 15 parts by weight per 100 parts by weight of the polypropylene composition, the heat resistance, rigidity and dimensional stability are still too low for large-size high-rigidity parts such as an automobile dashboard and an automobile center console. If the amount incorporated of the inorganic filler is 70 parts by weight or more, the improvement of the impact strength due to the incorporation of the reinforced elastomer is not satisfactory, and a problem of a lowering of the damage resistance arises.

If the content of the reinforced elastomer in the polypropylene composition is lower than 2% by weight, a satisfactory improvement of the impact resistance can not be attained.

In contrast, if the content of the reinforced elastomer in the polypropylene composition exceeds 50% by weight, the rigidity and heat resistance are greatly reduced, and the final composition is not suitable for the production of large-size high-rigidity parts.

In the polypropylene resin composition, the reinforced elastomer composition comprises 40 to 95% by weight, preferably 40 to 80% by weight, of a modified elastomer formed by modification with an unsaturated carboxylic acid or a derivative thereof, and 60 to 5% by weight, preferably 60 to 20% by weight, of a clay-polyamide composite. If the content of the modified polyamide exceeds 60% by weight, the reinforced elastomer composition becomes an islands-in-sea dispersion structure in which the clay-polyamide composite constitutes the sea, and the effect of improving the impact strength of the obtained polypropylene composition is not satisfactory. If the content of the clay-polyamide composite is lower than 5% by weight, a sufficient improvement of the rigidity, heat resistance and damage resistance, especially the damage resistance, can not be attained.

The composition of the present invention is formed by incorporating 1 to 20 parts by weight of a copolymer of ethylene and/or an α-olefin with "an unsaturated carboxylic acid or its derivative and/or" an unsaturated epoxy compound into 100 parts by weight of the composition comprising the above-mentioned modified elastomer and clay-polyamide composite. If the amount of the copolymer is smaller than 1 part by weight, the improvement of the physical properties by an enhancement of the dispersibility of the clay-polyamide composite in the reinforced elastomer is not manifested. If the amount of the copolymer is larger than 20 parts by weight, the molding processability is drastically degraded, and therefore, no good results can be obtained from the polypropylene composition.

The polypropylene composition of the present invention can be prepared by known procedures, except that the reinforced elastomer composition is first prepared and then the polypropylene composition is prepared.

The reinforced elastomer is obtained by dry-blending the modified elastomer and the clay-polyamide composite optionally with the copolymer of ethylene and/or the α-olefine with the unsaturated carboxylic acid or its derivative and/or the unsaturated epoxy compound within the above-mentioned mixing ratio range by a known means such as Henschel mixer, a V-blender, a ribbon blender or a tumbler blender, melt-mixing the blend by a single-screw extruder, a twin-screw extruder, a kneader or a Banbury mixer, and pelletizing the molten mixture.

Then the polypropylene composition is prepared by melt-mixing the reinforced elastomer and the modified polypropylene within the above-mentioned mixing ratio range, and pelletizing the molten mixture.

To simplify or omit the kneading step, the step of preparing the reinforced elastomer composition in advance can be included in the step of preparing the polypropylene composition of the present invention. More specifically, the polypropylene composition of the present invention can be prepared by forming the reinforced elastomer at the first step and charging the modified polypropylene into the molten reinforced elastomer at the second step. Furthermore, there can be adopted a process in which the polypropylene resin is melt-mixed with the inorganic filler at the first step and the reinforced elastomer composition is charged into the molten mixture at the second step. To carry out these processes effectively, preferably a twin-screw extruder having a high L/D ratio and comprising a starting material feed opening in the cylinder portion, in addition to a usual starting material feed opening, is used.

The thermoplastic resin composition of the present invention may further comprise usual additives such as an antioxidant, an ultraviolet absorbent, a lubricant, a pigment, an antistatic agent, a copper damage-preventing agent, a flame retardant, a neutralizing agent, a plasticizer, a nucleating agent, a dye, a foaming agent and a slip agent, as long as the attaining of the objects of the present invention is not hindered.

According to the second embodiment of the third aspect of the present invention, by using reinforced elastomer rendered rigid and tough by finely and uniformly dispersing a clay-polyamide composite in an elastomer, as an impact resistance improver for a polypropylene, and further incorporating an inorganic filler, the impact resistance and dimensional precision can be improved without a reduction of the rigidity, heat resistance, damage resistance, and mechanical strength of the polypropylene composition.

The novel composition provided according to the second embodiment of the third aspect of the present invention can be molded according to known molding methods such as injection molding and extrusion molding, and the composition has an excellent rigidity, heat resistance, damage resistance, and impact strength. Therefore, the composition of the present invention is preferably used for the production of automobile interior parts such as dashboards (or instrument panels), center consoles and trims, household electric appliances, various industrial parts such as machine parts, and other large-size high-rigidity particles for which a high rigidity, high heat resistance, high impact strength, and high dimensional precision are required.

Examples

The present invention will now be further illustrated by, but is by no means limited to, the following Examples.

The measurement methods used in the Examples 1-1 to 1-8 and Comparative Examples 1-1 to 1-5 are as follows.

1) Hardness (degree): JIS K-6301

2) Tensile strength (kg/cm²): JIS K-6301

3) Elongation (%) at break: JIS K-6301 Test piece thickness: 3 mm, dumbbell No. 3 Pulling speed: 500 mm/min

4) Tear Strength (kg/cm²): JIS K-6301, dumbbel B

5) Softening Point (°C): JIS K-7206, load of 196 g

The measurement methods used in the other Examples and Comparative Examples are as follows.

6) Tensile strength (TYS) (kg/cm²): ASTM D-638

7) Flexural strength (FS) (kg/cm²): ASTM D-2584

8) Flexural modulus (FM) (kg/cm²): ASTM D-2584

9) Izod impact strength (IZOD) (kg·cm/cm): ASTM D-256

10) Heat distortion temperature (HDT) (°C): ASTM D-648

11) Surface hardness (RH) (R scale): ASTM D-785

12) High-speed impact strength (HSI) (kg·cm): determined by the surface shock measuring method (UBE method) in which a disc having a thickness of 1.6 mm and a diameter of 100 mm is formed, a round missile is fallen at a speed of 2.5 m/sec at -10°C onto the disc as the test piece, and the breaking energy is calculated from the area of the stress-strain curve obtained at the time of breaking.

13) Scratch resistance: evaluated based on scratches observed when a plate (molded by injection molding) having a thickness of 2 mm and a size of 100 mm x 100 mm as the test piece was rubbed by sandpaper #80, back and forth one time, under a load of 1 kg; the mark "0" indicating no conspicuous scratches and the mark "X" indicating conspicuous scratches.

14) Linear expansion coefficient (mm/mm/°C): ASTM-696 (-30 to 30°C)

Test pieces for evaluation of the above-mentioned physical properties were obtained by an injection molding conducted under the conditions of a molding temperature of 240°C, a mold temperature of 50°C, an injection time of 15 seconds, and a cooling time of 30 seconds.

Example 1-1

By using a V-blender, 30% by weight of a clay-polyamide composite (hereinafter referred to as "MPA") and 70% by weight of a maleic anhydide-modified ethylene/propylene copolymer rubber (hereinafter referred to as "MEPR") were dry-blended, and the blend was melt-mixed at 240°C by a twin-screw extruder and the molten mixture was pelletized. The pellet was dried at 70°C and injection-molded at 250°C to obtain a plate having a thickness of 3 mm. Test pieces for measuring the physical properties were formed from this plate.

The MPA was prepared according to the following method. More specifically, 100 g of montmorillonite in which one unit thickness of the lamellar silicate was 9.5 Å on average and the average on side length was about 0.1 μm was dispersed in 10 $\ell$ of water, and 51.2 g of 12-amino-dodecanoic acid and 24 m$\ell$ of concentrated hydrochloric acid were added to the dispersion and the mixture was stirred for 5 minutes and filtered. The recovered solid was washed and vacuum-dried to obtain a ammonium 12-aminododecanoate ion/montmorillonite composite. Then, a reaction vessel equipped with a stirrer was charged with 10 kg of ε-caprolactam, 1 kg of water and 200 g of the dried composite, and stirring was conducted at 100°C so that a homogeneous mixture was formed. The temperature was elevated to 260°C and the mixture was stirred under a pressure of 15 kg/cm² for an hour. The pressure was released and water was evaporated from the reaction vessel, and in this state, the reaction was conducted for 3 hours under atomospheric pressure. After termination of the reaction, the reaction product was recovered in the form of a strand from a lower nozzle of the reaction vessel, and the reaction product was cooled with water and cut to obtain a MPA pellet comprising the polyamide having an average molecular weight of 15,000 and montmorillonite. The pellet was immersed in hot water to extract and remove the unreacted monomer, and the pellet was dried by a vacuum drier.

MEPR was prepared by adding 0.8 part by weight of maleic anhydride and 0.4 part by weight of dicumyl peroxide to 100 parts by weight of an ethylene/propylene copolymer rubber having a Mooney viscosity $ML_{1+4}^{100°C}$ of 50 and an ethylene content of 73% by weight and carrying out a modification in a paraxylene solution at 100°C. The melt index of the obtained MEPR was 0.7 g/10 min (230°C). The grafting amount of maleic anhydride was 0.6% by weight. The amount of maleic ahhydride grafted to MEPR was determined by dissolving MEPR into p-xylene, mixing the solution with cold acetone in an amount three times the amount of xylene to cool the solution and reprecipitate MEPR, filtering the solvent containing the reprecipitated MEPR, drying the recovered MEPR, dissolving the MEPR in p-xylene again, adding KOH to the solution while it was hot and carrying out titration with HC$\ell$ by using Thymol Blue as the indicator.

Example 1-2

A test piece was prepared by pelletizing 30% by weight of an ethylene/butene-1 copolymer rubber (EBR) having a Mooney viscosity $ML_{1+4}^{100°C}$ of 15 and an ethylene content of 82% by weight (hereinafter referred to as "EBR"), 25% by weight of an ethylene/propylene copolymer rubber having a Mooney viscosity $ML_{1+4}^{100°C}$ of 17 and

an ethylene content of 71% by weight (hereinafter referred to as "EPR"), 15% by weight of MEPR and 30% by weight of MPA, in the same manner as described in Example 1-1.

### Example 1-3

A test piece was prepared by pelletizing 30% by weight of EBR, 25% by weight of SEBS (Kraton G1657 supplied by Shell Chemical) (hereinafter referred to as "SEBS"), 15% by weight of maleic anhydride-modified SEBS (Kraton FG1901X) (hereinafter referred to as "MSEBS") and 30% by weight of MPA in the same manner as described in Example 1-1. The grafted amount of maleic anhydride in FG1901X was 2.0% by weight as determined by the above-mentioned method.

### Example 1-4

A test piece was prepared by pelletizing 55% by weight of SEBS, 15% by weight of MSEBS and 30% by weight of MPA in the same manner as described in Example 1-1.

### Example 1-5

A test piece was prepared by pelletizing 25% by weight of EPR, 15% by weight,of SEBS, 15% by weight of MSEBS and 45% by weight of MPA in the same manner as described in Example 1-1.

### Example 1-6

A test piece was prepared by pelletizing 63% by weight of EPR, 2% by weight of MEPR, 5% by weight of modified polypropylene graft-modified with 6% by weight of maleic anhydride and 30% by weight of MPA in the same manner as described in Example 1-1.

The modified polypropylene was obtained by adding 15 parts by weight of maleic anhydride and 1 part by weight of t-butyl peroxybenzoate to 100 parts by weight of a polypropylene homopolymer having a melt flow rate of 1 g/10 min (B101H supplied by Ube Kosan), carrying out modification in p-xylene at 130°C, removing p-xylene and unreacted monomers, and drying the reaction product. The melt flow rate of the obtained moidified polypropylene was 60 g/10 min and the grafted amount of maleic anhydride was 6% by weight.

### Example 1-7

A test piece was prepared by pelletizing 10% by weight of MPA, 50% by weight of EBR, 25% by weight of SEBS and 15% by weight of MSEBS in the same manner as described in Example 1-1.

### Example 1-8

A test piece was prepared by pelletizing 55% by weight of MPA, 30% by weight of SEBS and 15% by weight of MSEBS in the same manner as described in Example 1-1.

### Comparative Example 1-1

A test piece was prepared by pelletizing 70% by weight of EPR and 30% by weight of MPA in the same manner as described in Example 1-1.

### Comparative Example 1-2

A test piece was prepared in the same manner as described in Example 1-3 except that nylon-6 (1013B supplied by Ube Kosan) (hereinafter referred to as "PA") was used instead of MPA.

### Comparative Example 1-3

A test piece was prepared in the same manner as described in Example 1-4 except that PA was used instead of MPA.

Comparative Example 1-4

A test piece was prepared in the same manner as decribed in Example 1-5 except that PA was used instead of MPA.

Comparative Example 1-5

A test piece was prepared by pelletizing 68% by weight of EPR, 2% by weight of MEPR and 30% by weight of MPA in the same manner as described in Example 1-1.

The results obtained in Examples 1-1 to 1-8 and Comparative Examples 1-1 to 1-5 are shown in Table 1-1.

Table 1-1

| | | Example No. | | | | | | | | Comparative Example No. | | | | |
|---|---|---|---|---|---|---|---|---|---|---|---|---|---|---|
| | | 1-1 | 1-2 | 1-3 | 1-4 | 1-5 | 1-6 | 1-7 | 1-8 | 1-1 | 1-2 | 1-3 | 1-4 | 1-5 |
| Composition (% by weight) | MPA | 30 | 30 | 30 | 30 | 45 | 30 | 10 | 55 | 30 | - | - | - | 30 |
| | PA | - | - | - | - | - | - | - | - | - | 30 | 30 | 45 | - |
| | EPR | - | 25 | - | - | 25 | 63 | - | - | 70 | - | - | 25 | 68 |
| | MEPR | 70 | 15 | - | - | - | 2 | - | - | - | - | - | - | 2 |
| | EBR | - | 30 | 30 | - | - | - | 50 | - | - | 30 | - | - | - |
| | SEBS | - | - | 25 | 55 | 15 | - | 25 | 30 | - | 25 | 55 | 15 | - |
| | MSEBS | - | - | 15 | 15 | 15 | - | 15 | 15 | - | 15 | 15 | 15 | - |
| | MPP | - | - | - | - | - | 5 | - | - | - | - | - | - | - |
| Hardness JIS A | | 93 | 94 | 90 | 95 | 98 | 94 | 86 | 98 | 93 | 90 | 85 | 94 | 93 |
| Tensile strength | 100% | 175 | 165 | 85 | 115 | 200 | 185 | 80 | 260 | 90 | 70 | 55 | 150 | 90 |
| | 300% | - | - | 125 | 165 | - | - | 120 | - | - | 115 | 75 | - | - |
| Elongation | | 280 | 200 | 350 | 360 | 200 | 270 | 430 | 180 | 110 | 300 | 200 | 120 | 120 |
| Tear strength | | 80 | 60 | 65 | 90 | 150 | 75 | 57 | 190 | 40 | 52 | 35 | 60 | 47 |
| Softening temperature | | 64 | 58 | 55 | 61 | 75 | 63 | 56 | 84 | 48 | 49 | 46 | 55 | 51 |

EP 0 472 344 A2

In the following Examples 2-1 to 2-7 and Comparative Examples 2-1 to 2-6, the following starting materials were used.

1) Polypropylene (referred to as "PP")

A crystalline ethylene/propylene copolymer having a melt index of 15 g/10 min and an ethylene content of 10% by weight (J815HK supplied by Ube Kosan).

2) Modified polypropylene (referred to as "MPP")

A product obtained by dry-blending 0.2 part by weight of maleic anhydride and 0.2 part by weight of t-butyl peroxybenzoate into 100 parts by weight of a crystalline ethylene/propylene block copolymer having a melt index of 1.0 g/10 min and an ethylene content of 10% by weight by a V-blender, melt-mixing the blend by a single-screw extruder at 220°C and pelletizing the molten mixture.

3) Reinforced elastomer (referred to as "RE")

A product obtained by dry-blending a polyamide component, an elastomer component and other components at mixing ratios shown in Table 1 by a V-blender, melt-mixing the blend at 240°C by a twin-screw extruder (two-start screw type, L/D=40) and pelletizing the molten mixture.

4) Polyamide components

Nylon-6 (1013B supplied by Ube Kosan) was used as the usual polyamide (referred to as "PA").

A product prepared according to the following procedures was used as the clay-polyamide composite (referred to as "MPA").

In 10 $\ell$ of water was dispersed 100 g of montmorillonite having an average lamellar silicate one unit thickness of 9.5 Å and an average one side length of about 0.1 μm, and 51.2 g of 12-aminododecanoic acid and 24 m$\ell$ of concentrated hydrochloric acid were added to the dispersion. The mixture was stirred for 5 minutes and then filtered. The recovered solid was dried and vacuum-dried to obtain a composite comprising ammonium 12-aminododecanoate ion and montmorillonite. A reaction vessel equipped with a stirrer was charged with 10 kg of ε-caprolactam, 1 kg of water and 200 g of the dry composite, and stirring was carried out at 100°C so that a homogeneous mixture was obtained. Then, the temperature was elevated to 260°C and the mixture was further stirred for 1 hour under a pressure of 15 kg/cm$^2$. Then, the pressure was released to evaporate water from the reaction vessel, and in this sate, reaction was conducted for 3 hours under atmospheric pressure. After termination of the reaction, the reaction product taken out in the form of a strand from a nozzle disposed in the lower portion of the reaction vessel was cooled with water and cut to obtain a modified polyamide pellet comprising a polyamide having an average molecular weight of 15,000 and 2% by weight of montmorillonite. The pellet was immersed in hot water to extract and remove the unreacted monomer, and then the product was dried by a vacuum drier.

5) Elastomer components

The following elastomer components were used.

EPR: An ethylene/propylene copolymer rubber having a Mooney viscosity $ML_{1+4}$ of 70 and an ethylene content of 73% by weight.

Modified EPR (referred to as "MEPR"): A modified ethylene/propylene copolymer rubber obtained by adding 0.8 part by weight of maleic anhydride and 0.4 part by weight of dicumyl peroxide to 100 parts by weight of EPR and carrying out modification in a paraxylene solution at 100°C.

SEBS-1 (abbreviation): Kraton G1650 supplied by Shell Chemical.

SEBS-2 (abbreviation): Kraton G1657 supplied by Shell Chemical.

MSEBS (abbreviation): Kraton G1901X supplied by Shell Chemical.

6) Inorganic filler

Talc having an average particle size of 2 μm was used as the inorganic filler.

## Examples 2-1 to 2-4

By a using a V-blender, 10% by weight of MPP, 70% by weight of PP and 20% by weight of RE-1, RE-2, RE-3 or RE-4 were dry-blended, the blend was melt-mixed at 250°C by using a single-screw extruder having a screw diameter of 65 mm, and the molten mixture was pelletized. The pellet was dried with hot air at 80°C and injection-molded to form a test piece.

## Example 2-5

A test piece was prepared by pelletizing 10% by weight of MPP, 40% by weight of PP and 50% by weight of RE-1 in the same manner as described in Example 2-1.

Example 2-6

A test piece was prepared by pelletizing 30% by weight of MPP and 70% by weight of RE-1 in the same manner as described in Example 2-1.

Example 2-7

A test piece was prepared by pelletizing 90% by weight of MPP and 10% by weight of RE-1 in the same manner as described in Example 2-1.

Comparative Example 2-1

A test piece for measuring the physical properties was prepared by melt-mixing 80% by weight of PP and 20% by weight of EPR at 230°C by a single-screw extruder having a screw diameter of 65 mm and pelletizing the molten mixture and injection-molding the pellet.

Comparative Example 2-2

A test piece was prepared in the same manner as described in Comparative Example 2-1 except that SEBS-2 was used instead of EPR.

Comparative Example 2-3

A test piece was prepared by pelletizing 10% by weight of MPP, 70% by weight of PP and 20% by weight of MPA in the same manner as described in Example 2-1.

Comparative Example 2-4

A test piece was prepared by pelletizing 10% by weight of MPP, 70% by weight of PP, 7% by weight of EPR, 3% by weight of MEPR and 10% by weight of MPA in the same manner as described in Example 2-1.

Comparative Example 2-5

A test piece was prepared in the same manner as described in Comparative Example 2-4 except that SEBS-2 was used instead of EPR and MSEBS was used instead of MEPR.

Comparative Example 2-6

A test piece was prepared in the same manner as described in Example 2-3 except that elastomer (E-1) was used instead of RE-3.

The results obtained in the Examples and Comparative Examples are shown in Table 2-1.

18

Table 2-1

| | | Example No. | | | | | | | Comparative Example No. | | | | | |
|---|---|---|---|---|---|---|---|---|---|---|---|---|---|---|
| | | 2-1 | 2-2 | 2-3 | 2-4 | 2-5 | 2-6 | 2-7 | 2-1 | 2-2 | 2-3 | 2-4 | 2-5 | 2-6 |
| composition (% by weight) | MPP | 10 | 10 | 10 | 10 | 10 | 30 | 90 | - | - | 10 | 10 | 10 | 10 |
| | PP | 70 | 70 | 70 | 70 | 40 | - | - | 80 | 80 | 70 | 70 | 70 | 70 |
| | RE[*1] | RE-1 20 | RE-2 20 | RE-3 20 | RE-4 20 | RE-1 50 | RE-1 70 | RE-1 10 | - | - | - | - | - | E-1 20 |
| | EPR | - | - | - | - | - | - | - | 20 | - | - | 7 | - | - |
| | MEPR | - | - | - | - | - | - | - | - | - | - | 3 | - | - |
| | SEBS-2 | - | - | - | - | - | - | - | - | 20 | - | - | 7 | - |
| | MSEBS | - | - | - | - | - | - | - | - | - | - | - | 3 | - |
| | MPA | - | - | - | - | - | - | - | - | - | 20 | 10 | 10 | - |
| TYS | | 240 | 245 | 240 | 240 | 200 | 185 | 255 | 200 | 190 | 320 | 240 | 235 | 230 |
| FS | 23°C | 400 | 405 | 395 | 400 | 330 | 305 | 420 | 340 | 335 | 530 | 400 | 390 | 375 |
| FM | | 13500 | 13600 | 13400 | 13500 | 9000 | 7800 | 14000 | 10000 | 9000 | 17000 | 13500 | 12900 | 12700 |
| IZOD | 23°c | 27 | 30 | 28 | 28 | > 40 | > 40 | 25 | 35 | > 40 | 10 | 19 | 20 | 20 |
| | -30°C | 14 | 15 | 14 | 14 | > 40 | > 40 | 12 | 8 | 12 | 6 | 9 | 10 | 10 |
| HDT | 4.6 kg/cm² | 120 | 118 | 119 | 120 | 105 | 101 | 125 | 100 | 90 | 130 | 118 | 103 | 110 |
| RH | 23°C | 74 | 75 | 75 | 75 | 60 | 55 | 78 | 50 | 40 | 95 | 70 | 60 | 65 |
| HSI | -10°C | 550 | 580 | 565 | 580 | >700 | >700 | 510 | 430 | 500 | 250 | 450 | 460 | 450 |

*1: see Table 2-2

## Table 2-2

| | RE-1 | RE-2 | RE-3 | RE-4 | E-1 |
|---|---|---|---|---|---|
| MPA | 50 | 50 | 50 | 39 | – |
| PA | – | – | – | – | 50 |
| EPR | 35 | – | 20 | 36 | 20 |
| MEPR | 15 | – | 15 | 15 | 15 |
| SEBS-1 | – | 20 | – | – | – |
| SEBS-2 | – | 15 | 15 | – | 15 |
| MSEBS | – | 15 | – | – | – |
| PO | – | – | – | 10 | – |

In the following Examples 3-1 to 3-6 and Comparative Examples 3-1 to 3-5, the following starting materials were used.

1) Polypropylene (referred to as "PP")

A crystalline ethylene/propylene copolymer having a melt index of 15 g/10 min and an ethylene content of 10% by weight (J815HK supplied by Ube Kosan).

2) Modified polypropylene (referred to as "MPP")

A product obtained by dry-blending 0.2 part by weight of maleic anhydride and 0.2 part by weight of t-butyl peroxybenzoate into 100 parts by weight of a crystalline ethylene/propylene block copolymer having a melt index of 1.0 g/10 min and an ethylene content of 10% by weight by a V-blender, melt-mixing the blend by a single-screw extruder at 220°C, and pelletizing the molten mixture.

3) Reinforced elastomer (referred to as "RE")

A product obtained by dry-blending a polyamide component, an elastomer component and other components at mixing ratios shown in Table 3-1 by a V-blender, melt-mixing the blend at 240°C by a twin-screw extruder (two-start screw type, L/D=40) and pelletizing the molten mixture.

4) Polyamide components

Nylon-6 (1013B supplied by Ube Kosan) was used as the usual polyamide (referred to as "PA").

A product prepared according to the following procedures was used as a modified polyamide (referred to as "MPA").

In 10 $\ell$ of water was dispersed 100 g of montmorillonite having an average lamellar silicate one unit thickness of 9.5 Å and an average one side length of about 0.1 μm, and 51.2 g of 12-aminododecaonic acid and 24 m$\ell$ of concentrated hydrochloric acid were added to the dispersion. The mixture was stirred for 5 minutes and then filtered. The recovered solid was washed and vacuum-dried to obtain a composite comprising ammonium 12-aminododecanoate ion and montmorillonite. A reaction vessel equipped with a stirrer was charged with 10 kg of ε-caprolactam, 1 kg of water and 200 g of the dry composite, and stirring was carried out at 100°C so that a homogeneous mixture was obtained. Then, the temperature was elevated to 260°C and the mixture was further stirred for 1 hour under a pressure of 15 kg/cm$^2$. Then, the pressure was released to evaporate water from the reaction vessel, and in this state, reaction was conducted for 3 hours under atmospheric pressure. After termination of the reaction, the reaction product taken out in the form of a strand from a nozzle disposed in the lower portion of the reaction vessel was cooled with water and cut to obtain a modified polyamide pellet comprising a polyamide having an average molecular weight of 15,000 and 2% by weight of montmorillonite. The pellet was immersed in hot water to extract and remove the unreacted monomer, and then, the product was dried by a vacuum drier.

5) Elastomer components

The following elastomer components were used.

EPR: An ethylene/propylene compolymer rubber having a Mooney viscosity $ML_{1+4}$ of 70 and ethylene content of 73% by weight.

Modified EPR (referred to as "MEPR"): A modified ethylene/propylene copolymer rubber obtained by adding 0.8 part by weight of maleic anhydride and 0.4 part by weight of dicumyl peroxide to 100 parts by weight of ERP and carrying out modification in a paraxylene solution at 100°C.

SEBS-1 (abbreviation): Kraton G1650 supplied by Shell Chemical.

SEBS-2 (abbreviation): Kraton G1657 supplied by Shell Chemical.

MSEBS (abbreviation): Kraton G1901X supplied by Shell Chemical.

6) Inorganic filler

Talc having an average particle size of 2 μm was used as the inorganic filler.

Example 3-1

By using a V-blender, 100 parts by weight of a polypropylene composition comprising 10% by weight of MPP, 60% by weight of PP and 20% by weight of RE-1 and 11.1 parts by weight of talc were dry-blended, and the blend was melt-mixed at 250°C by a different-direction twin-screw extruder (2 FCM-65-mm single-screw extruders) and the molten mixture was pelletized. The pellet was dried by hot air at 80°C and injection-molded at 230°C to form a test piece.

Examples 3-2 to 3-5

A test piece was prepared by pelletizing 100 parts by weight of a polypropylene composition comprising 10% by weight of MPP, 55% by weight of PP and 25% by weight of a reinforcing elastomer RE-2, RE-3, RE-4 or RE-5 and 11.1 parts by weight of talc in the same manner as described in Example 3-1.

Examples 3-6

A test piece was prepared by pelletizing 100 parts by weight of a polypropylene composition comprising 10% by weight of MPP, 30% by weight of PP and 50% by weight of RE-6 and 11.1 parts by weight of talc in the same manner as described in Example 3-1.

Comparative Example 3-1

By using a V-blender, 100 parts by weight of a polypropylene composition comprising 80% by weight of PP and 25% by weight of EPR and 11.1 parts by weight of talc were dry-blended, and the blend was melt-mixed at 220°C by a different-direction twin-screw extruder (2 FCM-65-mm single-screw extruders) and the molten mixture was pelletized. The pellet was dried by hot air at 80°C and injection-molded at 230°C to obtain a test piece.

Comparative Example 3-2

A test piece was prepared by pelletizing a polypropylene resin composition comprising 10% by weight of MPP, 70% by weight of PP and 20% by weight of RE-1 in the same manner as described in Example 3-1.

Comparative Example 3-3

A test piece was prepared by pelletizing 100 parts by weight of a polypropylene composition comprising 10% by weight of MPP, 60% by weight of PP, 4% by weight of EPR, 3% by weight of SEBS-2, 3% by weight of MSEBS and 10% by weight of MPA and 11.1 part by weight of talc in the same manner as described in Example 3-1.

Comparative Example 3-4

A test piece was prepared in the same manner as described in Example 3-2 to 3-4 except that an elastomer (E-1) was used instead of RE-2.

Comparative Example 3-5

A test piece was prepared by pelletizing 100 parts by weight of a polypropylene composition comprising 10% by weight of MPP, 40% by weight of PP and 25% by weight of RE-2 and 33.3 parts by weight of talc in the same manner as described in Example 3-2.

The results are shown in Table 3-1.

Table 3-1

| | | Example No. | | | | | | Comparative Example No. | | | | |
|---|---|---|---|---|---|---|---|---|---|---|---|---|
| | | 3-1 | 3-2 | 3-3 | 3-4 | 3-5 | 3-6 | 3-1 | 3-2 | 3-3 | 3-4 | 3-5 |
| composition (% by weight) | MPP | 10 | 10 | 10 | 10 | 10 | 10 | - | 10 | 10 | 10 | 10 |
| | PP | 60 | 55 | 55 | 55 | 55 | 30 | 65 | 70 | 60 | 55 | 40 |
| | RE[1] | RE-1 20 | RE-2 25 | RE-3 25 | RE-4 25 | RE-5 25 | RE-6 50 | - | RE-1 20 | - | E-1 25 | RE-2 25 |
| | EPR | - | - | - | - | - | - | 25 | - | 4 | - | - |
| | MEPR | - | - | - | - | - | - | - | - | - | - | - |
| | SEBS-2 | - | - | - | - | - | - | - | - | 3 | - | - |
| | MSEBS | - | - | - | - | - | - | - | - | 3 | - | - |
| | MPA | - | - | - | - | - | - | - | - | 10 | - | - |
| | TALC[2] | 11.1 | 11.1 | 11.1 | 11.1 | 11.1 | 11.1 | 11.1 | - | 11.1 | 11.1 | 33.3 |
| TYS | | 240 | 230 | 225 | 235 | 225 | 210 | 180 | 235 | 235 | 225 | 250 |
| FS | 23°C | 395 | 360 | 350 | 370 | 350 | 320 | 290 | 390 | 385 | 335 | 425 |
| FM | | 15200 | 14000 | 14200 | 14000 | 14200 | 11000 | 11000 | 13100 | 14800 | 13700 | 24100 |
| IZOD | 23°C | 27 | 30 | 28 | 33 | 31 | > 40 | > 40 | 29 | 15 | 19 | 17 |
| | -30°C | 13 | 15 | 14 | 18 | 17 | > 40 | 16 | 14 | 7 | 8 | 8 |

*1: see Table 3-2.
*2: amount (parts by weight) of talc per 100 parts by weight of resin composition.

EP 0 472 344 A2

Table 3-1 (Continued)

|  |  | Example No. | | | | | | Comparative Example No. | | | | |
|---|---|---|---|---|---|---|---|---|---|---|---|---|
|  |  | 3-1 | 3-2 | 3-3 | 3-4 | 3-5 | 3-6 | 3-1 | 3-2 | 3-3 | 3-4 | 3-5 |
| HDT | 4.6 | 125 | 121 | 122 | 120 | 120 | 110 | 105 | 116 | 118 | 114 | 134 |
| RH | 23°C | 75 | 73 | 73 | 72 | 72 | 65 | 38 | 73 | 73 | 69 | 74 |
| HSI | -10°C | 570 | 600 | 580 | 610 | 600 | >700 | 480 | 575 | 440 | 470 | 390 |
| Scratch resistance | | o | o | o | o | o | o | × | o | o | o | o |
| Linear expansion coefficient $\times 10^{-5}$ | | 7.3 | 7.2 | 7.5 | 7.1 | 7.2 | 7.3 | 7.0 | 15.0 | 7.4 | 7.3 | 6.5 |

24

## Table 3-2

|        | RE-1 | RE-2 | RE-3 | RE-4 | RE-5 | RE-6 | E-1 |
|--------|------|------|------|------|------|------|-----|
| MPA    | 50   | 45   | 45   | 45   | 35   | 60   | –   |
| PA     | –    | –    | –    | –    | –    | –    | 45  |
| EPR    | 20   | 25   | 40   | –    | 40   | –    | 25  |
| MEPR   | –    | –    | 15   | –    | 15   | –    | –   |
| SEBS-1 | –    | –    | –    | 25   | –    | 20   | –   |
| SEBS-2 | 15   | 15   | –    | 15   | –    | –    | 15  |
| MSEBS  | 15   | 15   | –    | 15   | –    | 20   | 15  |
| PO     | –    | –    | –    | –    | 10   | –    | –   |

In the following Examples 4-1 to 4-5 and Comparative Examples 4-1 to 4-6, the following starting materials were used.

1) Modified Polypropylene

A modified polypropylene (hereinafter referred to as "MPP") obtained by adding 0.2 part by weight of maleic anhydride and 0.2 part by weight of t-butyl peroxybenzoate to 100 parts by weight of a crystalline ethylene/propylene block copolymer having a melt index of 1.0 g/10 min and an ethylene content of 10% by weight and melt-mixing the blend at 220°C by single-screw extruder was used.

The melt index of this modified polypropylene was 25 g/10 min (at 230°C), and the grafted amount of maleic anhydride was 0.18% by weight. The amount of maleic anhydride grafted to MPP was determined by dissolving MPP in p-xylene, mixing the solution with cold acetone in an amount three times the amount of p-xylene, cooling the mixture to precipitate MPP, filtering the solvent containing the precipitated MPP, drying the recovered solid, dissolving the solid in p-xylene again, adding KOH to the solution while it was hot, and carrying out titration with HC$\ell$ by using Thymol Blue as an indicator.

2) Polypropylene

A crystalline ethylene/propylene copolymer having a melt index of 15 g/10 min and an ethylene content of 10% by weight (J815HK supplied by Ube Kosan) was used.

3) Reinforced Elastomer

The following elastomer components were used.

EPR: An ethylene/propylene copolymer rubber having a Mooney viscosity $ML_{1+4}^{100°C}$ of 50 and an ethylene content of 73% by weight.

MEPR: A modified ethylene/propylene copolymer rubber obtained by adding 0.8 part by weight of maleic anhydride and 0.4 part by weight of dicumyl peroxide to 100 parts by weight of EPR and carrying out a modification in a paraxylene solution at 100°C.

The melt index of this MEPR was 0.7 g/10 min (230°C), and the grafted amount of maleic anhydride was 0.6% by weight. The amount grafted of maleic acid was determined according to the same method as described above with respect to MPP.

SEBS-1: Kraton G1650 supplied by Shell Chemical.

SEBS-2: Kraton G1657 supplied by Shell Chemical.

MSEBS: "Kraton FG1901X", maleic anhydride-modified SEBS supplied by Shell Chemical, was used. The amount grafted of maleic acid was 2.0% by weight as determined according to the above-mentioned method.

As the modified polyamide in the reinforced elastomer, there was used a modified polyamide having molecular weight of 15,000 and a montmorillonite content of 2% by weight (hereinafter referred to as "MPA").

As the usual nylon, "Nylon-6 1013B" supplied by Ube Kosan was used.

As the other component of the reinforced elastomer, there was used a modified polypropylene (hereinafter referred to as "PO") formed by adding 15 parts by weight of maleic anhydride and 1 part by weight of t-butyl peroxybenzoate to 100 parts by weight of a polypropylene homopolymer having a melt flow index of 1 g/10 min (230°C) (B101H supplied by Ube Kosan) and carrying out a modification in p-xylene at 130°C. The MFR of the PO was 60 g/10 min, and the amount grafted of maleic anhydride was 6% by weight.

The reinforced elastomer was obtained by melt-mixing components shown in Table 4-2 at 240°C by a twin-screw extruder and pelletizing the molten mixture.

4) Inorganic Filler

Talc having an average particle size of 2 μm was used.

### Example 4-1

By using a V-blender, 12.5% by weight of modified polypropylene (MPP), 75% by weight of polypropylene (PP) and 12.5% by weight of reinforced elastomer (RE-1) were dry-blended with talc in an amount of 25 parts by weight per 100 parts by weight of the sum of MPP, PP and RE-1, the blend was melt-mixed by a different-direction twin-screw extruder (2 FCM-65-mm EXT extruders), and the molten mixture was pelletized. The pellet was dried by hot air at 80°C and was injection-molded at 230°C to form a test piece for determining the physical properties.

### Example 4-2

A test piece was prepared by pelletizing 12.5% by weight of MPP, 62.5% by weight of PP and 25% by weight of RE-2, and 25 parts by weight, per 100 parts by weight of the sum of MPP, PP and RE-2, of talc in the same manner as described in Example 4-1.

### Example 4-3

A test piece was prepared by pelletizing 12.5% by weight of MPP, 62.5% by weight of PP and 25% by weight of RE-3 and 25 parts by weight, per 100 parts by weight of the sum of MPP, PP and RE-3, of talc in the same manner as described in Example 4-1.

### Example 4-4

A test piece was prepared by pelletizing 15.4% by weight of MPP, 38.4% by weight of PP and 46.2% by weight of RE-2, and 53.8 parts by weight, per 100 parts by weight of the sum of MPP, PP and RE-2, of talc in the same manner as described in Example 4-1.

### Example 4-5

A test piece was prepared by pelletizing 12.5% by weight of MPP, 62.5% by weight of PP and 25% by weight of RE-4, and 25 parts by weight, per 100 parts by weight of the sum of MPP, PP and RE-4, of talc in the same manner as described in Example 4-1.

### Comparative Example 4-1

A test piece was prepared by melt-mixing 87.5% by weight of polypropylene (PP) and 12.5% by weight of an ethylene/propylene copolymer rubber (EPR) with talc in an amount of 25 parts by weight per 100 parts by weight of the sum of PP and EPR by 2 FCM-65-mm EXT extruders at 220°C, pelletizing the molten mixture and injection-molding the pellet at 230°C.

### Comparative Example 4-2

A test piece was prepared in the same manner as described in Comparative Example 1 except that a styrene type elastomer (SEBS-1) was used instead of EPR.

Comparative Example 4-3

A test piece was prepared by pelletizing 100 parts by weight of a polypropylene composition comprising 75% by weight of PP, 12.5% by weight of EPR and 12.5% by weight of SEBS-1 and 25 parts by weight of talc in the same manner as described in Comparative Example 4-1.

Comparative Example 4-4

A test piece was prepared by pelletizing 100 parts by weight of a polypropylene composition comprising 11.1% by weight of MPP, 66.7% by weight of PP and 22.2% by weight of RE-2, and 11.1 parts by weight of talc in the same manner as described in Example 4-1.

Comparative Example 4-5

A test piece was prepared in the same manner as described in Example 4-2 except that an elastomer (E-1) was used instead of RE-2.

Comparative Example 4-6

A test piece was prepared by pelletizing 100 parts by weight of a polypropylene composition comprising 15.4% by weight of MPP, 38.5% by weight of PP, 11.5% by weight of EPR, 7% by weight of a modified ethylene/propylene copolymer rubber (MEPR), 4.6% by weight of SEBS-2 and 23.0% by weight of MPA, and 53.8 parts by weight of talc in the same manner as described in Example 4-1.
The results are shown in Table 4-1.

Table 4-1

| | | Example No. | | | | | | Comparative Example No. | | | | | |
|---|---|---|---|---|---|---|---|---|---|---|---|---|---|
| | | 4-1 | 4-2 | 4-3 | 4-4 | 4-5 | 4-1 | 4-2 | 4-3 | 4-4 | 4-5 | 4-6 |
| Composition of Resin Components (% by weight) | MPP | 12.5 | 12.5 | 12.5 | 15.4 | 12.5 | - | - | - | 11.1 | 12.5 | 15.4 |
| | PP | 75 | 62.5 | 62.5 | 38.4 | 62.5 | 87.5 | 87.5 | 75 | 66.7 | 62.5 | 38.5 |
| | RE[*1] | RE-1 | RE-2 12.5 | RE-3 25 | RE-2 25 | RE-4 46.1 | - 25 | - | - | RE-2 | E-1 22.2 | - 25 |
| | EPR | - | - | - | - | | 10 | - | 10 | - | - | 11.5 |
| | MEPR | - | - | - | - | | - | - | - | - | - | 7.0 |
| | SEBS-1 | - | - | - | - | | - | 10 | 10 | - | - | - |
| | SEBS-2 | - | - | - | - | | - | - | - | - | - | 4.6 |
| | MPA | - | - | - | - | | - | - | - | - | - | 23.0 |
| TALC[*2] (parts by weight) | | 25 | 25 | 25 | 53.8 | 25 | 25 | 25 | 25 | 11.1 | 25 | 53.8 |
| TYS | | 270 | 255 | 255 | 270 | 260 | 250 | 255 | 220 | 240 | 240 | 260 |
| FS | 23°C | 450 | 435 | 430 | 460 | 435 | 430 | 435 | 380 | 395 | 405 | 440 |
| FM | | 28000 | 25000 | 25000 | 30300 | 26500 | 23500 | 24000 | 20000 | 17000 | 23000 | 28000 |
| IZOD | -30°C | 6 | 8 | 9 | 10 | 10 | 4 | 4 | 15 | 13 | 6 | 5 |
| HDT | 4.6 | 136 | 132 | 131 | 133 | 135 | 125 | 127 | 110 | 122 | 123 | 128 |
| RH | 23°C | 80 | 77 | 76 | 76 | 78 | 71 | 71 | 50 | 73 | 72 | 75 |
| HSI | -10°C | 300 | 430 | 450 | 460 | 460 | 350 | 330 | 500 | 540 | 360 | 290 |

Table 4-1 (Continued)

| | Example No. | | | | | Comparative Example No. | | | | | |
|---|---|---|---|---|---|---|---|---|---|---|---|
| | 4-1 | 4-2 | 4-3 | 4-4 | 4-5 | 4-1 | 4-2 | 4-3 | 4-4 | 4-5 | 4-6 |
| Scratch resistance | o | o | o | o | o | Δ | Δ | × | o | o | o |
| Linear expansion coefficient $\times 10^{-5}$ | 5.2 | 5.1 | 5.1 | 4.7 | 5.1 | 5.5 | 5.2 | 5.7 | 6.5 | 5.3 | 4.7 |

*1: see Table 2.
*2: The amount of talc was parts by weight per 100 parts by weight of the resin composition.

## Table 4-2

|        | RE-1 | RE-2 | RE-3 | RE-4 | E-1 |
|--------|------|------|------|------|-----|
| MPA    | 50   | 50   | 50   | 50   | –   |
| EPR    | –    | 25   | 25   | 20   | 25  |
| MEPR   | –    | 15   | –    | –    | 15  |
| SEBS-1 | 25   | –    | –    | –    | –   |
| SEBS-2 | 10   | 10   | 10   | 10   | 10  |
| MSEBS  | 15   | –    | 15   | 15   | –   |
| PO     | –    | –    | –    | 5    | –   |
| PA     | –    | –    | –    | –    | 50  |

**Claims**

1. A reinforced thermoplastic elastomer composition comprising:
   (i) 40-95% by weight of a modified elastomer (b) obtained by modifying at least a part of an elastomer (a) with an $\alpha,\beta$ unsaturated carboxylic acid or a derivative thereof, and
   (ii) 60-5% by weight of a clay-polyamide composite (c)

2. A reinforced elastomer compositions as claimed in claim 1, wherein said clay-polyamide composite is obtained by polymerizing a monomer or monomers of the polyamide in the pressure of a clay mineral.

3. An eleastomer composition as claimed in claim 1, wherein said elastomer is ethylene-$\alpha$-olefin copolymer rubber, and/or hydrogenated block copolymer of a monovinyl aromatic compound having the formula:
   A-(B-A)$_n$ wherein A is a polymer block of a monovinyl substituted aromatic hydrocarbon, B is an elastomeric polymer block of a conjugated diene, and n is an integer of 1 to 5.

4. A reinforced elastomer composition as claimed in claim 1, further comprising (iii) 1 to 20 parts by weight of at least one copolymer selected from the group consisting of copolymers of ethylene and unsaturated caboxylic acid or derivatives thereof, copolymers of ethylene and unsaturated epoxy compounds, copolymers of $\alpha$-olefins and unsaturated caboxylic acids or derivatives thereof, and copolymers of $\alpha$-olefins and unsaturated epoxy compounds, based upon 100 parts by weight of the composition of claim 1.

5. A polypropylene composition comprising:
   (i) 98 to 30% by weight of a modified polypropylene obtained by treating a crystalline polypropylene with an unsaturated carboxylic acid or a derivative thereof to graft modify at least a part of the crystalline polypropylene and
   (ii) 2 to 70% by weight of the reinforced thermoplastic elastomer compositon of claim 1.

6. A polypropylene composition comprising (i) the polypropylene composition of claim 5, and (ii) an inorganic filler.

7. A polypropylene composition as claimed in claim 6, wherein the amount of the inorganic filler (ii) is 1 part by weight to less than 15 parts by weight, based upon 100 parts by weight of the polypropylene composition (i).

8. A polypropylene composition as claimed in claim 6, wherein the amount of the inorganic filler (ii) is 15 parts by weight to less than 70 parts by weight, based upon 100 parts by weight of the polypropylene composition (i).

9. The automobile bumper which is made of the polypropylene compound of claim 7.

10. The automobile dashboard which is made of the polypropylene compound of claim 8.